# EUROPEAN PATENT APPLICATION

(11) **EP 3 316 207 A1**
(43) Date of publication of application: **02.05.2018**
(21) Application number: 17197712.7
(22) Date of filing: 23.10.2017
(51) Int. Cl.: G06Q 40/04, G06Q 50/06

(54) **METHOD AND SYSTEM FOR DETERMINATION OF MARKET CLEARING PRICE IN DAY AHEAD ENERGY MARKETS**

(30) Priority: 25.10.2016 TR 201614588
(71) Applicant: Enerji Piyasalari Isletme Anonim Sirketi, 34394 Istanbul (TR)
(72) Inventor: Kurt, Nermin Elif, 34394 Istanbul (TR); Ceyhan, Gokhan, Istanbul (TR); Derinkuyu, Kursad, Ankara (TR); Sahin, Hikmet Bahadir, 34394 Istanbul (TR); Kalkan, Zeynep Gul, Ankara (TR); Yildiz, Ozan, Istanbul (TR)
(74) Representative: Kaya, Erdem

(57) **Abstract**

The present invention is a computer based price determination method where the bids are received by means of a communication unit and where a processor unit (110) accesses the bids in order to determine market clearing price by means of solving the matching problem in time slices within the upcoming day for the bids in direction of supply/demand of the participants (30) in day ahead market. Accordingly, the present invention is characterized by accessing the mathematical model and parameters of said problem by the processor unit (110), applying said model parameters and said bids to the mathematical model of the problem, solving the mathematical model by means of at least one heuristic algorithm in accordance with at least one variable, searching the optimal solution by means of an optimization software of the mathematical model by accepting the solution, obtained from the heuristic algorithm, as the beginning solution, presenting the optimal solution to the user finally when said optimal solution has been found.

## Description

### TECHNICAL FIELD

The present invention relates to a computer based price determination system comprising a communication interface which provides data exchange with the participants in order to determine the market clearing price by means of solving the matching problem in time slices on the upcoming day for the bids in direction of supply/demand of the participants in day ahead market, and a processor unit which can access the bids of the participants, and relates to a price determination method using this system.

### PRIOR ART

Electricity is a good which can be sold, purchased and exchanged and the storage of electricity is not effective in terms of cost. Therefore, the supply and demand shall be balanced in real time. Electricity markets provide purchasing, selling, short-time exchanging of electricity.

While the persons who realize electricity trade can meet their needs by means of contracts in bilateral agreements and financial futures markets in the long-term, when the delivery date of electricity is near, spot market comes into play. Said spot markets are Day Ahead Market, Intra-Day Market, Balancing Power Market and Side Services Market.

Day Ahead Market is the market where each market participant provides bids of purchase-sales-price-amount related to each hour of the upcoming day and where the day ahead price is determined in accordance with these.

The problem occurring in the Day Ahead Market is a mathematically difficult (NP-Hard) problem. In the day ahead electricity market, participants may provide bids for the different hours of the upcoming day. The market operator finds the purchase/sales amount which is valid for each bid. This is defined as the matching amount. The market operator aims to find the matching amounts in a manner maximizing the market surplus. Said market surplus is equal to the total of the producer surplus and consumer surplus. The producer surplus is the difference of the total gain which will be received by a participant from the matched amount and the total cost in order to sell this amount to the market. The consumer surplus is the difference between the maximum money which will be given by the participant in order to buy the bidden amount and the money really paid by the participant in order to buy that amount. Since valid bids are provided for more than one hour, whole of the 24 hours is transformed into a single problem. Thus, in the structure of said problem, there are different bid types (hourly, block, flexible), transmission and region delimitations, and said problem shall be solved in a short time.

In the present art, this problem is solved by optimization (development) software. Since there is time limitation, the best result of the software is presented as the best solution. This solution obtained in limited duration can be far from the optimal solution. This may affect the market participants in an unfavorable manner.

As a result, because of all of the abovementioned problems, an improvement is required in the related technical field.

### BRIEF DESCRIPTION OF THE INVENTION

The present invention relates a price determination system and method, for eliminating the above mentioned disadvantages and for bringing new advantages to the related technical field.

An object of the present invention is to provide determination of a feasible market clearing price within a limited duration.

Another object of the present invention is to provide a system and method where market clearing price calculation is accelerated in the day ahead market.

In order to realize all of the abovementioned objects and the objects which are to be deducted from the detailed description below, the present invention is a computer based price determination method where the bids are received by means of a communication unit and where a processor unit accesses the bids in order to determine market clearing price by means of solving the matching problem in time slices within the upcoming day for the bids in direction of supply/demand of the participants in day ahead market. Accordingly, the improvement is that the present invention comprises the following steps;
a) accessing the mathematical model of said problem by the processor unit,
b) applying said model parameters and said bids to the mathematical model,
c) solving the mathematical model by means of at least one heuristic algorithm in accordance with at least one variable by the processor unit, realizing said solving process for optimizing said variable in accordance with a predetermined object,
d) searching the optimal solution, where the variable is optimal for said object, by means of an optimization software of the mathematical model by beginning from the solution obtained from the heuristic algorithm,
e) presenting the optimal solution as the final solution to the users when said optimal solution has been found.

Thus, a feasible solution can be easily found by means of a heuristic algorithm, and afterwards, this solution can be improved by means of optimization software. Thus, the risk that the optimization software cannot find the optimal solution within the given duration is reduced.

In a preferred embodiment of the invention, said variable is market surplus, and said target is the maximum market surplus.

In another preferred embodiment of the invention, step c is repeated for a predetermined duration.

In another preferred embodiment of the invention, in step d, optimal solution is searched for a predetermined duration, and if the optimal solution cannot be found within this duration, the intermediate solution, whose variable target is the most compliant to the target is selected as the final solution and if the intermediate solution value cannot be found, the solution, obtained by means of the heuristic algorithm, is accepted as the final solution. Thus, in order for the market clearing price to reach the upcoming day, the solutions which are closest to the optimal solution can be obtained within predetermined time limits. This eliminates the unbalance formed in case the result cannot be found.

In another preferred embodiment of the invention, in step c, at least two different heuristic algorithms are used and thus, pluralities of results can be obtained. Therefore, the beginning solution provided for the optimization software can be at least partially improved.

In another preferred embodiment of the invention, the heuristic algorithms provided in step c are the Tabu Search and Genetic Algorithm.

In another preferred embodiment of the invention, step c comprises the following additional steps:
f) comparing the solutions obtained through different algorithms,
g) selecting the solution, whose at least one variable value is most suitable to the predetermined object, among said solutions.

In another preferred embodiment of the invention, in step g, in case the variables are equal, a second variable, which is the most suitable for the second target, is selected.

In another preferred embodiment of the invention, said second variable is the market clearing price and the target is the minimum price.

In another preferred embodiment of the invention, step d comprises the following sub-steps:
h) flexing at least one of the model parameters and applying the new model parameters to the mathematical model,
i) solving the model by means of the optimization software and thus obtaining a slack solution,
j) comparing the slack solution with the non-slack model parameters,
k) if the slack solution provides all of the non-slack model parameters, presenting it to the user as the final solution.

Thus, the optimization software rapidly finds the optimal solution.

In another preferred embodiment of the invention, said bids comprise at least the price and amount information.

In another preferred embodiment of the invention, said bids are realized related to a specific time slice.

The present invention is moreover a computer based price determination system comprising a communication interface which solves the problem of matching supply/demand bids of the participants in the day ahead market and which provides realization of data exchange with the participants in order to determine the market clearing price, and a processor unit which can access the bids of the participants. The improvements of said system are that a data source is provided which is connected to said processor unit and which accommodates the mathematical model of said problem and the model parameters, the processor unit is configured in a manner applying the model parameters and bids to the mathematical model of the problem, the processor unit is also configured in a manner solving the mathematical model by means of at least one heuristic algorithm with respect to at least one variable and the processor unit is moreover configured in a manner optimizing the beginning solution whose model is obtained from the heuristic algorithm and in a manner providing presentation to the participants.

### BRIEF DESCRIPTION OF THE FIGURES

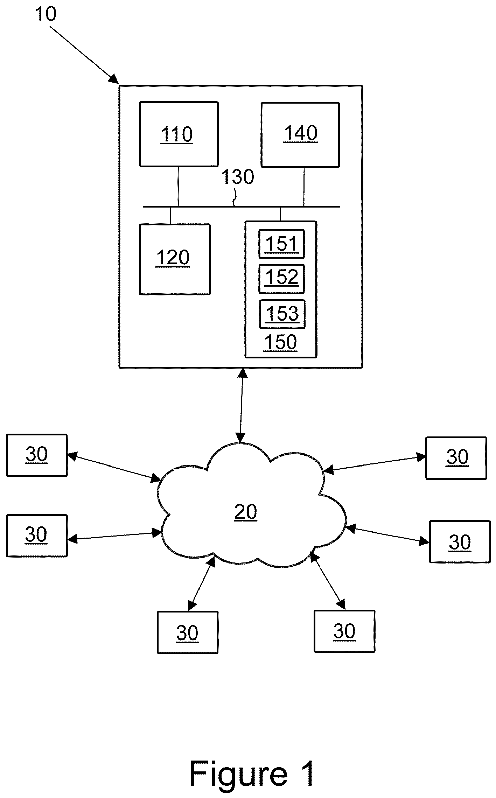

In Figure 1, a representative view of the price determination system is given.

### REFERENCE NUMBERS

10 Price determination system
   110 Processor unit
   120 Data source
   130 Data path
   140 Communication interface
   150 Memory unit
      151 Bid receiving module
      152 Heuristic solution module
      153 Optimization module
20 Communication network
30 Participant

### DETAILED DESCRIPTION OF THE INVENTION

In this detailed description, the subject matter method and system is explained with references to examples without forming any restrictive effect only in order to make the subject more understandable.

The price determination system (10) essentially receives bids from the market participants (30) and solves the supply/demand bids for at least one variable for the mathematical model of the market in a manner matching 24 hours of the upcoming day and presents them to the participants (30).

Even if the present invention is described for electricity market, it can also be applied to any energy market having a day ahead market like gas market, petrol market and LPG market for obtaining a rapid and feasible result.

With reference to Figure 1, the price determination system (10) provided in this exemplary application comprises a processor unit (110), a communication interface (140), a memory unit (150) and a data path (130) connecting all other peripheral units which are not described here. The processor unit (110) can be any general-purpose or special-purpose processor. The memory unit (150) may comprise any combination of RAM, ROM, magnetic or optical fixed disc or any data storage device which can be read by computer. The communication interface (140) can be any network interface card or other type of communication device which will provide access to a communication network (20). The price determination system (10) can receive data from the participants (30) by means of the communication interface (140) and can send data to the participants (30). Accordingly, in this preferred application of the present invention, said price determination system (10) can be a computer or a server.

Said participant describes the client devices which send bid to the price determination system (10) in order to realize purchase-sales in the day ahead electricity market. Said participants can be any device like computer, smart phone, tablet computer which can communicate with the price determination system (10).

The processor unit (110) processes information and executes the commands, and these information and commands are stored permanently or temporarily in the memory unit (150). The price determination system (10) can access a data source (120) through said data path in a more integrated embodiment or through the communication network (20) by means of the communication interface (140).

Said data source (120) may comprise model limitations required for forming the mathematical model of the problem and the model parameters describing the numerical values which can be changed in relation to these model limitations. Said mathematical problem comprises the functions formed with model limitations and whole functions. The model limitations can be the limitations related to day ahead market, conditions and requirements. Provided that the example is not restricted with these, said data source (120) may comprise the following restrictions related to the market; equal supply and demand in every period, acceptance of the block bids in supply direction if the block bids are lower than or equal to the average market clearing price of the valid hours, acceptance of a flexible bid in at most one period.

The participants (30) may submit bid in direction of supply and demand. Said bids at least comprise the price and amount information of electricity and they are sent related to a time slice. The price in the bid in direction of purchase describes the maximum money sacrificed for said amount, and the price in the bid in direction of sales describes the minimum money requested for the sale of said amount. Within a time interval selected in Table 1; an exemplary bid is given where in case the price is 0 and in case the price is 120, the participant (30) desires to purchase 100 lots, in case the price is 200, the participant (30) desires to purchase 20 lots, in case the price is 300, the participant (30) desires to purchase 5 lots and in case the price is 2000, the participant (30) desires to purchase 10 lots. A unit of the lot which is the amount unit here is equal to 0.1 MWh.

**Table 1**

| | | | | | | |
|---|---|---|---|---|---|---|
| Price ( 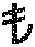 ) | 0 | 120 | 200 | 250 | 300 | 2000 |
| Amount (Iot) | 100 | 100 | 20 | 0 | -5 | -10 |

The participants (30) send bid to the price determination system (10) by means of said communication network (20) and can receive the matching amount, realized as a result of these bids, from the price determination system (10). The bid determination system receives bid from the participants (30) by means of interface and web site provided by a server (not illustrated in the figure) provided on the communication network (20) and can inform the participants (30) about the matching amount.

Said software of the price determination system (10) formed by the command sets executed by the processor unit (110) consists of pluralities of functional modules provided in the memory unit (150). Accordingly, the memory unit (150) may comprise a bid receiving module (151), a heuristic solution module (152) and an optimization module.

Said bid receiving module (151) receives the bids sent by the participants (30) and transforms into suitable format. When required, the bid receiving module (151) saves these bids in the data source (120).

Said heuristic solution module (152) solves the problem of matching the purchasing and sale bids with each other within 24 hours of the upcoming day by means of heuristic algorithms taking a target variable as a base and in accordance with model parameters in the data source (120). In the present embodiment, said target variable is the market surplus and it is targeted that this value is maximum in the solution. In very short time, the heuristic algorithms can obtain a feasible solution even if not optimal. In other words, even if this feasible solution does not have maximum market surplus, it is a solution which is within the model limitations.

In this exemplary embodiment, Tabu Search and Genetic Algorithm are used in order to bring a feasible solution to the problem. In general, the tabu search is a heuristic method based on regional search and it searches the neighbors in a detailed manner for finding the best result and it passes to the neighbor which gives the best result and moreover searches the neighbors thereof. In general, the genetic algorithm intercrosses the best matches of the good solutions and it is aimed to obtain better solutions.

The heuristic solution module (152) searches the solution of the problem for a predetermined duration. When this duration is completed, the solution whose target variable is more suitable than the other one is selected as the beginning solution among the feasible solutions found by the tabu search and genetic algorithm. In case the target variables are equal, a second target variable is based on and the one whose second target variable is more suitable than the other one can be selected as the beginning solution. Said second target variable can be price, difference tone (daily total purchase-sales amount), etc. In case the price is the second target variable, the solution where the price is low is selected as the beginning solution such that said solution is beneficial for the purchaser.

Said optimization module (153) mathematically solves the problem, modeled by using model limitations, in a compliant manner to the model parameters by means of the optimization software based on the beginning solution received from the heuristic solution module (152). In this exemplary embodiment, the optimization software utilizes IBM ILOG CPLEX library. The optimization module (153) stops the optimization process when a predetermined duration passes and outputs the final solution which is within the frame of the model parameters in the data source (120) and whose target variable is most suitable. Since the beginning solution is a feasible solution, the optimization software finds results which improve this solution and can obtain a solution which is close to optimal solution.

In another exemplary embodiment, a slack model is solved where at least one model parameter is flexed or where at least one of the model limitations in the data source (120) of the optimization module (153) is ignored and a real model is solved in the frame where all model limitations are taken into account. If the solution of the slack model provided a result which is suitable for all model limitations, it is taken as the final solution. If the solution of the slack model is not suitable for all model limitations, it is solved according to the real model, and the slack solution is repaired so as to provide the model limitations, and in case the model limitations are provided, the repaired slack model solution and the rear model solution are compared and the one with the target variable which is at a suitable value than the other one is selected as the final solution.

The result of the final solution is given in a representative manner in Table 2 for the 24 hours of the day ahead. The PTF statement in Table 2 describes an exemplary market clearing price.

**Table 2**

| | |
|---|---|
| PTF1 | 00:00-01:00 |
| PTF2 | 01:00-02:00 |
| PTF3 | 02:00-03:00 |
| PTF4 | 03:00-04:00 |
| ▪ | ▪ |
| ▪ | ▪ |
| ▪ | ▪ |
| PTF24 | 23:00-00:00 |

Thus, the optimization module (153) presents at least one feasible solution to the participants (30) within predetermined duration. The presentation of the final solution to the users can be provided through a web site in a public or private manner or can be sent to the users through another communication channel in a private manner.

The protection scope of the present invention is set forth in the annexed Claims and cannot be restricted to the illustrative disclosures given above, under the detailed description. It is because a person skilled in the relevant art can obviously produce similar embodiments under the light of the foregoing disclosures, without departing from the main principles of the present invention.

## Claims

1. A computer based price determination method where the bids are received by means of a communication unit and where a processor unit (110) accesses the bids in order to determine market clearing price by means of solving the matching problem in time slices within the upcoming day for the bids in direction of supply/demand of the participants (30) in day ahead market, **wherein;**
a) accessing the mathematical model and parameters of said problem by the processor unit (110),
b) applying said model parameters and said bids to the mathematical model of the problem, by the processor unit (110),
c) solving the mathematical model by means of at least one heuristic algorithm in accordance with at least one variable by the processor unit (110), realizing said solving process for optimizing said variable in accordance with a predetermined object,
d) searching the optimal solution, where the variable is optimal for said object, by means of an optimization software of the mathematical model by beginning from the solution, obtained from the heuristic algorithm, by the processor unit (110),
e) presenting the optimal solution to the participants (30) by the processor (110) finally when said optimal solution has been found.

2. A price determination method according to claim 1, wherein said variable is market surplus, and said target is the maximum market surplus.

3. A price determination method according to claim 1, wherein step c is repeated for a predetermined duration.

4. A price determination method according to claim 1, wherein in step d, optimal solution is searched for a predetermined duration, and if the optimal solution cannot be found within this duration, the intermediate solution, whose variable target is the most compliant to the target is selected as the final solution and if the intermediate solution value cannot be found, the solution, obtained by means of the heuristic algorithm, is accepted as the final solution.

5. A price determination method according to claim 1, wherein in step c, at least two different heuristic algorithms are used.

6. A price determination method according to claim 1, wherein the heuristic algorithms provided in step c are the Tabu Search and Genetic Algorithm.

7. A price determination method according to claim 6, wherein step c comprises the following additional steps:
f) comparing the solutions obtained through different algorithms,
g) selecting the solution, whose at least one variable value is most suitable to the predetermined object, among said solutions.

8. A price determination method according to claim 8, wherein in step g, in case the variables are equal, a second variable, which is the most suitable for the second target, is selected by the processor unit.

9. A price determination method according to claim 8, wherein said second variable is the market clearing price and the target is the minimum price.

10. A price determination method according to claim 1, wherein step d comprises the following sub-steps:
h) flexing at least one of the model parameters and applying the new model parameters to the mathematical model,
i) solving the model by means of the optimization software and thus obtaining a slack solution,
j) comparing the slack solution with the non-slack model parameters,
k) if the slack solution provides all of the non-slack model parameters, presenting it to the user as the final solution.

11. A price determination method according to claim 6, wherein said bids comprise at least the price and amount information.

12. A computer based price determination system (10) comprising a communication interface (140) which solves the problem of matching supply/demand bids of the participants (30) in the day ahead market and which provides realization of data exchange with the participants (30) in order to determine the market clearing price, and a processor unit (110) which can access the bids of the participants (30), **wherein;**
a data source (120) is provided which is connected to said processor unit (110) and which accommodates the mathematical model of said problem and the model parameters,
the processor unit (110) is configured in a manner applying the model parameters and bids to the mathematical model of the problem,
the processor unit (110) is also configured in a manner solving the mathematical model by means of at least one heuristic algorithm with respect to at least one variable and
the processor unit (110) is moreover configured in a manner optimizing the beginning solution whose model is obtained from the heuristic algorithm and in a manner providing presentation to the participants (30).
